# EUROPEAN PATENT SPECIFICATION

(11) **EP 0 529 733 B1**
(45) Date of publication and mention of the grant of the patent: **28.05.1997**
(21) Application number: 92202581.2
(22) Date of filing: 25.08.1992
(51) Int. Cl.: G11B 15/12, G11B 20/10

(54) **Arrangement for receiving a magnetic tape accomodated in a cassette**
Verfahren zum Empfangen von einem Magnetband im einer Kassette
Dispositif pour recevoir une bande magnétique dans une cassette

(30) Priority: 30.08.1991 JP 76803/91; 30.08.1991 JP 76802/91; 30.08.1991 JP 76801/91
(43) Date of publication of application: 03.03.1993
(73) Proprietor: Philips Electronics N.V., 5621 BA Eindhoven (NL)
(72) Inventor: Kato, Yasuo, NL-5656 AA Eindhoven (NL); Lokhoff, Gerardus Cornelis Petrus, NL-5656 AA Eindhoven (NL)
(74) Representative: van der Kruk, Willem Leonardus

(56) References cited:
- EP-A- 0 422 849

## Description

### Field of the invention

This invention relates to a cassette tape apparatus suitable for receiving an analog and a digital cassette, comprising a digital-signal reproducing head, an analog-signal reproducing head, an analog-signal output terminal and first switching means for coupling the analog-signal output terminal either to an output of the analog-signal reproducing head or via a D/A converter to an output of the digital-signal reproducing head.

Such apparatus is described in EP 381 266 A1. Such an apparatus is capable of reproducing either analog-audio signals from a standard audio compact cassette or digital-signals from a digital compact cassette (DCC). Such apparatuses can be used in car radio's, where preferably only the either analog or digital reproduction facilities of the arrangement is required.

Apparatuses for home-use are however moreover provided with a digital recording facility, so as to record audio signals, that are applied in analog or digital form, on the record carrier included in a digital compact cassette. In that case, an A/D converter is provided for converting the audio signal applied in analog form into a digital audio signal so as to enable a recording of the analog audio signal on a digital compact cassette.

The invention aims at simplifying the production of the various apparatuses, such as, applied in a car radio or in a DCC home-recorder.

To that purpose, the apparatus in accordance with the invention is characterized in that the cassette tape apparatus further comprises an A/D converter and that for reproducing an analog cassette the first switching means couples the output of the analog-signal reproducing head via said A/D converter to said D/A converter, whilst for reproducing a digital cassette the first switching means couples the output of the digital-signal reproducing head to said D/A converter.

The invention is based on the following recognition.
Manufacturers of apparatuses as previously described aim at reducing production costs by developing identical circuit constructions for various types of arrangements. More specifically in apparatuses provided with a digital-signal recording and a reproduction head and an analog-signal reproduction head, such arrangement is provided with an A/D converter for converting the analog signal supplied to the arrangement into the digital domain so as to enable the signal to be recorded by the digital-signal recording head.

If, in such an arrangement, the output of the analog-signal reproducing head is coupled to the input of the A/D converter, and subsequently coupled via the D/A converter to the analog-signal output terminal, an analog selection switch can be left out. This lowers the production costs.

Selection between the signal reproduced by the analog-signal reproduction head and the signal reproduced by the digital-signal reproduction head can now be realized by the monitor switch which is already normally present between the AID converter and the D/A converter.
Further, such a monitor switch, which is incorporated in the digital domain, can be realized more easily than analog switches.

As an additional advantage, coupling the output of the analog-signal reproducing head to the input of the A/D converter, offers the possibility to supply the analog signal after A/D conversion, to a digital-signal output terminal.

The invention will now be described in more detail, in which
figure 1 shows a first, and
figure 2 a second embodiment of the apparatus.

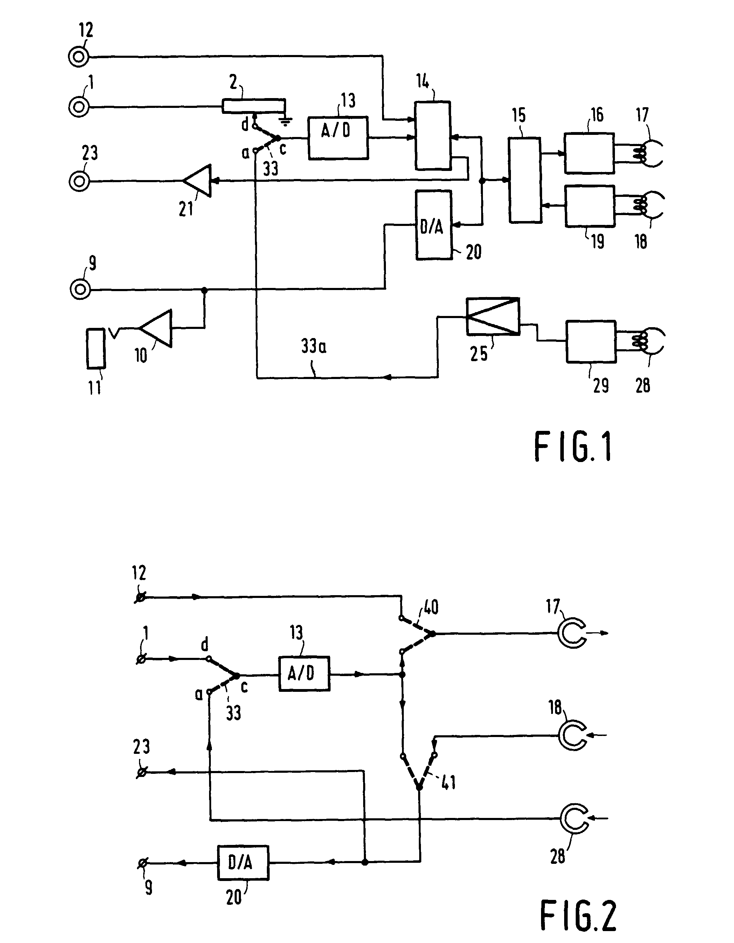

Figure 1 diagrammatically shows a circuit of a cassette tape recorder according to an embodiment of the present invention. In figure I an analog signal input terminal 1, a recording level adjuster 2, an analog signal output terminal 9, an amplifier 10, a head-phone terminal 11, a digital interface 14, a digital signal processor 15, a recording amplifier 16, a recording head 17, a reproduction head 18, a reproduction amplifier 19, a digital-to-analog converter 20, a buffer amplifier 21 and a digital signal output terminal 23.

Shown at 28 is an analog signal reproduction head which is connected to a reproduction amplifier 29. This amplifier is connected to the noise reduction circuit 25.

A signal change-over switch 33 is interposed between the input of the analog-to-digital converter 13 and the output of the noise reduction circuit 25. This switch 33 connects the noise reduction circuit 25 to the analog-to-digital converter 13 when a terminal c thereof is brought into contact with a terminal a of this switch, and connects the analog-to-digital converter 13 to the recording level adjuster 2 when the terminal c is brought into contact with another terminal d of this switch.

The operation of the above circuit will now be described. It is assumed here that the switch element 33 is now positioned so as to connect the terminals d and c with each other. In this case, an analog signal supplied to the analog signal input terminal 1 is subjected to a recording level adjustment at the recording level adjuster 2 and is fed to the digital interface 14 after converted into a digital signal in the analog-to-digital converter 13. The digital signal is converted into a standardized digital signal by this digital interface and is then supplied to the digital signal processor 15 wherein the signal is subject to necessary signal processing such as data conversion processing, interleaving and modulation processing. The thus processed digital signal is fed to the recording amplifier 16 and then recorded on a digital compact cassette tape through the recording head 17.

On the other hand, a digital signal fed to the digital signal input terminal 12 is directly supplied to the digital interface 14, which signal is then processed in the same way as described above and recorded on a digital compact cassette tape. To that purpose, the interface 14 comprises switching means so as to select either the analog or the digital input signal for recording.

The operation of this circuit in the reproduction mode will now be described.
(A) The case where a digital signal is to be outputted from the digital signal output terminal when reproducing an analog signal or a digital signal.
   (1) When reproducing an analog signal, the switch 33 is positioned so as to connect the terminals a and c with each other. An analog signal detected by the reproduction head 28 from an analog compact cassette tape is supplied through the reproduction amplifier 29, the noise reduction circuit 25 and the signal change-over switch 33 to the analog-to-digital converter 13. The reproduced analog signal is converted into a digital signal in this converter and fed through the digital interface 14, the buffer amplifier 21 and the transformer 22 to the digital signal output terminal 23, from which the digital signal is supplied to an external device.
   (2) When reproducing a digital signal, a digital signal detected by the reproduction head 18 from a digital compact cassette tape is fed through the reproduction amplifier 19, the digital signal processor 15, the digital interface 14 and the buffer amplifier 21 to the digital signal output terminal 23, from which the reproduced digital signal is supplied to an external device.

   Thus, in either of the analog and digital reproduction modes, the reproduced signal can be outputted through the single signal circuit from the digital signal output terminal 23 as a digital signal.
(B) The case where an analog signal is to be outputted from the analog signal output terminal when reproducing an analog signal or a digital signal.
   (1) When reproducing an analog signal, the switch 33 is positioned so as to connect the terminals a and c. An analog signal detected by the reproduction head 28 from an analog compact cassette tape is supplied through the reproduction amplifier 29, the noise reduction circuit 25 and the signal change-over switch 33 to the analog-to-digital converter 13 in which the reproduced analog signal is converted into a digital signal. This digital signal is fed through the digital interface 14 to the digital-to-analog converter 20 wherein the digital signal is converted into an analog signal, which signal is outputted from the analog signal output terminal 9.
   (2) When reproducing a digital signal, switching means are provided so that a digital signal detected by the reproduction head 18 from a digital compact cassette tape and fed through the reproduction amplifier 19 and the digital signal processor 15 is applied to the digital-to-analog converter 20 wherein the digital signal is converted into an analog signal which is outputted from the analog signal output terminal 9.

Thus, in either of the analog and digital reproduction modes, the reproduced signal can be outputted through the single signal circuit from the analog signal output terminal 9 as an analog signal.

With this embodiment, in either of the analog and digital reproduction modes, a digital signal can be outputted from the digital signal output terminal 23 and an analog signal can be outputted from the analog signal output terminal 9. Therefore, when connecting this recorder to an audio amplifier the connection can be achieved by employing only either one of the analog signal circuit or the digital signal circuit. Thus, the connection is very simple.

In the above connection, since one of the analog and digital signal circuits is used as a common signal circuit in either of the analog and digital reproduction modes, there will be no difference in sound quality due to the kind of signal circuit.

Figure 2 shows the arrangement more schematically. More specifically, all the switching means are shown more clearly. Switching means 40 is present so as to select either the digital input signal present at the input 12 or the digital output signal of the A/D converter 13. The switching means 41 is provided so as to select either the reproduced digital signal from the digital reproduction part including the head 18, or the digital output signal of the A/D converter 13.

It is to be noted here that the digital reproducing and recording part 15, 16, 17, 18 and 19, need not necessarily be provided with a separate recording head 17 and a separate reproducing head 18. The recording head 17 and the reproducing head can be combined into one recording/reproducing head.

Further, when applying the invention in an apparatus for use in a car radio, normally the digital recording facility will not be present. This means for the embodiment of figure 2 that the elements with reference numeral 1, 12, 17, 23 and 40, can be left out and that the switch 33 should be replaced by an electrical interconnection between a and c.

It is evident that, where appropriate, the apparatus can be provided with an analog-signal recording head, so as to enable the recording of an analog-signal applied to the analog-signal input terminal, or a digital signal after D/A conversion.

## Claims

1. A cassette tape apparatus suitable for receiving an analog and a digital cassette, comprising a digital-signal reproducing head (18), an analog-signal reproducing head (28), an analog-signal output terminal (9) and first switching means for coupling the analog-signal output terminal (9) either to an output of the analog-signal reproducing head (28) or via a D/A converter to an output of the digital-signal reproducing head (18), characterized in that the cassette tape apparatus further comprises an A/D converter (13) and that for reproducing an analog cassette the first switching means couples the output of the analog-signal reproducing head (28) via said A/D converter to said D/A converter, whilst for reproducing a digital cassette the first switching means couples the output of the digital-signal reproducing head to said D/A converter.

2. The apparatus as claimed in Claim 1, characterized in that it comprises digital signal recording and reproducing heads (17,18), a digital-signal input terminal (12) which can be coupled to an input of the digital-signal recording head (17), a digital-signal output terminal (23) which can be coupled to an output of the digital signal reproducing head (18), an analog-signal input terminal (1), second switching means (40) for coupling either the digital-signal input terminal or the analog-signal input terminal via the A/D converter to the input of the digital-signal recording head (17).

3. The apparatus as claimed in Claim 2, characterized in that third switching means (33) are provided so as to enable a coupling between an input of the A/D converter and either the analog-signal input terminal or the output of the analog-signal reproducing head (28).

4. The apparatus as claimed in Claim 1, 2 or 3, characterized in that fourth switching means (14) are provided to couple the output of the A/D converter to a digital-signal output terminal.

## Patentansprüche

1. Zum Einsetzen einer analogen und einer digitalen Kassette geeignetes Kassettenbandgerät, mit einem Digitalsignal-Wiedergabekopf (18), einem Analogsignal-Wiedergabekopf (28), einer Analogsignal-Ausgangsklemme (9) und ersten Schaltmitteln zum Koppeln der Analogsignal-Ausgangsklemme (9) entweder an einen Ausgang des Analogsignal-Wiedergabekopfes (28) oder über einen D/A-Umsetzer an einen Ausgang des Digitalsignal-Wiedergabekopfes (18), dadurch gekennzeichnet, daß das Kassettenbandgerät weiterhin einen A/D-Umsetzer (13) umfaßt und daß zur Wiedergabe einer analogen Kassette das erste Schaltmittel den Ausgang des Analogsignal-Wiedergabekopfes (28) über den genannten A/D-Umsetzer mit dem genannten D/A-Umsetzer koppelt, während zur Wiedergabe einer digitalen Kassette das erste Schaltmittel den Ausgang des Digitalsignal-Wiedergabekopfes mit dem genannten D/A-Umsetzer koppelt.

2. Gerät nach Anspruch 1, dadurch gekennzeichnet, daß es Digitalsignal-Aufzeichnungs- und Wiedergabeköpfe (17, 18) umfaßt sowie eine Digitalsignal-Eingangsklemme (12), die mit einem Eingang des Digitalsignal-Aufzeichnungskopfes (17) gekoppelt werden kann, eine Digitalsignal-Ausgangsklemme (23), die mit einem Ausgang des Digitalsignal-Wiedergabekopfes (18) gekoppelt werden kann, eine Analogsignal-Eingangsklemme (1) und zweite Schaltmittel (40) zum Koppeln entweder der Digitalsignal-Eingangsklemme oder der Analogsignal-Eingangsklemme über den A/D-Umsetzer mit dem Eingang des Digitalsignal-Aufzeichnungskopfes (17).

3. Gerät nach Anspruch 2, dadurch gekennzeichnet, daß dritte Schaltmittel (33) vorhanden sind, um eine Kopplung zwischen einem Eingang des A/D-Umsetzers und entweder der Analogsignal-Eingangsklemme oder dem Ausgang des Analogsignal-Wiedergabekopfes (28) zu ermöglichen.

4. Gerät nach Anspruch 1, 2 oder 3, dadurch gekennzeichnet, daß vierte Schaltmittel (14) vorhanden sind, um den Ausgang des A/D-Umsetzers mit einer Digitalsignal-Ausgangsklemme zu koppeln.

## Revendications

1. Appareil à cassette de bande magnétique susceptible de recevoir une cassette analogique et une cassette numérique, comprenant une tête de reproduction de signaux numériques (18), une tête de reproduction de signaux analogiques (28), une borne de sortie de signaux analogiques (9) et un premier moyen de commutation pour coupler la borne de sortie de signaux analogiques (9) à une sortie de la tête de reproduction de signaux analogiques (28) ou, via un convertisseur D/A, à une sortie de la tête de reproduction de signaux numériques (18), caractérisé en ce que l'appareil à cassette de bande magnétique comprend en outre un convertisseur A/D (13) et en ce que, pour reproduire une cassette analogique, le premier moyen de commutation couple la sortie de la tête de reproduction de signaux analogiques (28), via ledit convertisseur A/D, audit convertisseur D/A, tandis que, pour reproduire une cassette numérique, le premier moyen de commutation couple la sortie de la tête de reproduction de signaux numériques audit convertisseur D/A.

2. Appareil selon la revendication 1, caractérisé en ce qu'il comprend des têtes d'enregistrement et de reproduction de signaux numériques (17, 18), une borne d'entrée de signaux numériques (12) qui peut être couplée à une entrée de la tête d'enregistrement de signaux numériques (17), une borne de sortie de signaux numériques (23) qui peut être couplée à une sortie de la tête de reproduction de signaux numériques (18), une borne d'entrée de signaux analogiques (1), un deuxième moyen de commutation (40) pour coupler la borne d'entrée de signaux numériques ou la borne d'entrée de signaux analogiques, via le convertisseur A/D, à l'entrée de la tête d'enregistrement de signaux numériques (17).

3. Appareil selon la revendication 2, caractérisé en ce qu'un troisième moyen de commutation (33) est prévu pour permettre un couplage entre une entrée du convertisseur A/D et la borne d'entrée de signaux analogiques ou la sortie de la tête de reproduction de signaux analogiques (28).

4. Appareil selon la revendication 1, 2 ou 3, caractérisé en ce qu'un quatrième moyen de commutation (14) est prévu pour coupler la sortie du convertisseur A/D à une borne de sortie de signaux numériques.
